# EUROPEAN PATENT APPLICATION

(11) **EP 1 324 212 A2**
(43) Date of publication of application: **02.07.2003**
(21) Application number: 02080323.5
(22) Date of filing: 12.12.2002
(51) Int. Cl.: G06F 17/21, G09B 5/00

(54) **System and method for compiling and distributing modular publishing and instruction materials in an electronic environment**

(30) Priority: 12.12.2001 US 339301 P
(71) Applicant: Accenture Global Services GmbH, 8212 Neuhausen Am Rheinfall (Schaffhausen) (CH)
(72) Inventor: Daniel, Danny B., Mohegan Lake, NY 10547 (US); Lee, Debra A., New York, NY 10280 (US)
(74) Representative: Long, Giorgio

(57) **Abstract**

The disclosed systems and methods for computer aided instruction and electronic publishing employ modular design approaches whereby instructional and informational content is broken into multi-level objects including self-contained electronic learning and electronic content objects. The system and method facilitates the development, maintenance and modification of course and publication content because they may be advantageously located centrally in a large library of independent electronic learning and electronic content objects that serve as building blocks for electronic courses and publications. Modular CAI systems and methods of the invention can be used to monitor student progress both by administering examinations and tracking what content particular students have accessed and/or reviewed. In preferred embodiments, the invention includes authors using the Internet-accessed tools and templates to compile instructional and informational content, and the subsequent delivery of web-based instructional or informational content to end users such that the end users can receive and review such content using computing devices running standard web browsing applications.

## Description

### Cross Reference to Related Applications

This application claims benefit of the filing date of U.S. provisional patent application serial number 60/339,301, filed December 12, 2001.

### Field of the Invention

The present invention relates to the field of electronic publishing and computer delivered instruction. More particularly, the present invention relates to methods and systems for compiling and delivering electronic publications and computer aided learning materials that are adapted to convey information to and obtain feedback from a plurality of users via electronic communication networks.

### Background of the Invention

Currently, various computer aided instruction ("CAI") and electronic publishing ("e-publishing") approaches and technologies are known. While a great deal of interest has arisen in this field recently due to increasing pervasiveness of the Internet, computers digital media within everyday life, and especially into the workplace and classroom, the current approaches employed in CAI and e-publishing often relegate computer-based learning and information delivery to an unacceptable alternative to more traditional classroom instruction and publishing mechanisms. In the practice of these current CAI and e-publishing approaches, several prevalent problems arise in the area of course and publication development and maintenance, and in end user progress management.

For example, one common current approach to the publishing and delivery of electronic instruction materials uses portable storage media, such as diskettes and CD-ROMs, to deliver proprietary course software in the form of executable files that an end user or student runs independently on his or her personal computer or workstation. A significant problem with this approach is that once the end user obtains the software, the course author, administrator or instructor loses control over the content. Thus, for example, a course administrator would be unable to monitor end user (i.e., student) progress or participation, and additionally is unable to control adequately further dissemination of or updates to the materials.

Furthermore, in the specific case of CD-ROMs, which typically can be encoded only once, the course provider or materials publisher is unable to make customization changes to the course or publication after the CD-ROMs have been encoded. In such cases, the flexibility of the learning environment is severely restricted. For example, students could be given an older version of and electronic course, containing outdated or even erroneous information, solely because of the cost of updating the course and minting new CD-ROMs is prohibitive. Alternatively, for example, a student could be given course materials directed at students at a very different (more or less advanced) learning level. Thus, course development, courseware maintenance, and student progress management is undesirably restricted and the computer aided learning system is thereby unable to respond to evolving and individual needs of its students.

U.S. Patent No. 6,149,438, to Richard et al., discloses a network system for computer aided instruction wherein a network of computers provide instruction to students by accessing a central library of content stored on a server. This "mainframe" approach is a fairly common approach to CAI that requires students to individually login to the main server and access the learning materials located therein. Such mainframe systems traditionally run special courseware programs on the students' remote workstations to access information from the server and display the information on the device.

The World Wide Web (the "Web"), the well known interface to the Internet that organizes information contained in various documents ("web pages") through hypermedia, comprises many web pages wherein each web page may contain information in the form of text or embedded references to images, audio and video clips, or other web pages. A Web user can access these pages, and thus utilize the contained information, over the Internet from remote computing devices using computer applications, and web browsers in particular. In order to make web pages readable by all types of web browsers on various computing devices, web pages are typically specified in terms of content and format by a hardware and browser independent page description language, such as the well-known HyperText Markup Language ("HTML") and various similar languages. Due to the popularity of the Web, it would be very advantageous to for CAI systems and e-publishing systems to allow interaction, content delivery and/or instruction to take place using standard web browsers and common personal computing hardware.

However, providing electronically published instructional content that is readable by browsers over the Internet, while simplifying the task of connecting remote end users to content located on a central mainframe, still has several challenges. Web pages by design are intended only to provide access to remotely located and organized information. This, necessarily, is not the same thing as providing instruction, which becomes problematic in the case of compiling and delivering electronic learning materials and publications. Specifically, in order to deliver complete instruction, a CAI system and the e-learning materials and e-publications it relies upon must serve as a stand-alone source of instruction. Such CAI and e-publishing systems must be self-sufficient in that they contain completely encapsulated topic information. The need to ensure that such systems are self-sufficient, however, must be balanced by the need that a CAI system provides the appropriately leveled content, allows meaningful interaction by the end user students, and provides helpful feedback to students.

While mainframe-based CAI systems, because of their ability to hold course and student data in a centrally accessible database, may alleviate the problems inherent in electronic course maintenance and student progress management, they do not address problems inherent in course development. The subject matter knowledge required to instruct students, or "instructional knowledge," and the knowledge necessary to compile instructional information into a readily deliverable e-learning format, or "programming knowledge," are typically not contained by a single person. A similar mismatch of subject matter knowledge and programming knowledge manifests problems in electronic publishing. Thus, in creating, modifying and maintaining CAI courseware and e-publications, a subject matter expert, such as a course instructor or topic author, respectively, is needed to supply current instructional or informational knowledge on a topic while a separate networking system administrator ordinarily is necessary to compile the information into a computerized instruction or publication format. Current mainframe-based CAI systems still have not satisfactorily simplified the task of compiling instructional information into a computer deliverable format. Similarly, contemporary mainframe approaches for managing and compiling digital publication content has suffered from an inability to easily adapt to collaborative publishing over the Internet.

Additionally, another problem confronting current mainframe-based computer aided instruction systems is the fact that it is often difficult to provide the "give and take" and other informative feedback present in a traditional classroom, such as giving a student immediate answers to questions or remedial instruction in the students areas of weaker comprehension. The role of a traditional instructor is to recognize when a student is making a mistake and to thereby appropriately instruct the student how to correct those mistakes. In the field of current computer aided instruction, this role has often been forced back upon the student because the student must recognize what topics are not understood fully as well as know where and how to access further instruction in the computerized course material.

U.S. Patent No. 6,039,575, to L'Allier et al., discloses an interactive computer aided learning system wherein a battery of pre-tests are administered to students prior to the system electronically providing any instruction. The results of the pre-tests are used to select a series of electronic instructional units to provide to the student wherein those units address the deficiencies identified by the pre-test.

While the system described in L'Allier et al. provides a mechanism for identifying topics in which a student may need instruction, it does not address the problems inherent in developing and maintaining libraries of courseware. For instance, while such a pre-test may be able to identify what knowledge a student needs instruction regarding, it still does not solve the problems inherent in the compilation and maintenance of computerized course materials.

Further with regard to contemporary e-learning and e-publication approaches, tools and systems, there is a general failure to take advantage of the benefits of knowledge warehousing and sharing which can be realized with electronic content and media. Specifically, it would be beneficial if approaches could be developed that would allow for the effort, expense and time spent on compiling information and materials into e-learning and e-publishing content to be saved by allowing for that content to be saved, cataloged, and re-used in the future for new endeavors. In this manner, significant information and knowledge bases and resources could be compiled and ultimately shared by various authors and instructors over a period of time.

Thus, there remains a need in the art for an improved system and method for computer aided instruction that overcomes the above-described and other disadvantages inherent in the prior art.

### Summary of the Invention

Accordingly, the present invention is an improvement over the prior art systems methods for the electronic compilation and publication of informational and instructional content, including into computer-aided instruction courses and electronic publications.

In light of the drawbacks inherent in the prior art, it is an object of the present invention to provide a system and method for simplifying collaborative compilation and publication of information, including computer aided instruction materials and electronic publications, that overcomes the above-described and other disadvantages inherent in the prior art.

As such, it is also an object of the present invention to provide a network-based system through which authors can easily compile informational or instructional content for digital publications or computer aided instruction courses without having to engage in web page design. Concurrently, it is an object of the present invention to provide such a system and method whereby selected persons can receive and review such compiled instructional and informational content, preferably over the Internet using standard web browsing software.

Additionally, it is an object of the present invention to provide a system and method for compiling and providing computer aided instruction whereby course instructional content can be shared and later easily modified and updated for reuse in other courses by course instructors in a modular manner. Similarly, it is an object of the present invention to provide a system and method for compiling and publishing digital publications whereby publication informational content can be stored and later easily modified and updated for reuse in other publications by authors in a modular manner.

It is also an object of the present invention to enable authors to design and transfer new informational or instructional content and updated information for existing electronic publications or computer aided instruction courses from their individual remote computers and into a central library database from which publications and courses may be compiled at a later time.

Furthermore, it is an object of the present invention to provide and system and method for compiling electronic publications, including CAI courses, in a modular manner whereby content can be easily rearranged, updated, and deleted without having to make any changes to the remainder of the publication, course or curriculum as a whole.

Also, it is an object of the present invention to provide and system and method for compiling electronic publications, including CAI courses, whereby the layout and navigational structure of an electronic publication can be easily modified to produce a transformed publication having the same informational and instructional content of the original electronic publication.

To achieve these and other objects, the disclosed systems and methods for collaborative compilation and publication of digital publications and computer aided instruction courses employ a modular design whereby constituent informational and/or instructional content is logically divided into multi-level objects, including self-contained electronic content ("e-content") objects and electronic learning ("e-learning") objects, respectively. The system and method facilitates the development, maintenance and modification of publication and course materials because the materials centrally located in a large library of objects that serve as building blocks for the digital publications and electronic instructional courses.

In preferred embodiments of the present invention wherein the objects are electronic learning ("e-learning") objects and the publications are computer aided instruction ("CAI") courses, due to the use of a central serving location, the modular CAI system and method can be used to create electronic learning courses that integrally monitor student progress both by administering examinations integrally with electronic learning courses and tracking what content particular students have accessed and/or reviewed within a given course.

E-content and e-learning objects according to the present invention are self-contained, independent and complete units, providing information or instruction, respectively, designed to be transmitted to a reader or student in electronic format through an electronic communication medium. In preferred embodiments of the invention, one or more e-content or e-learning objects are arranged in a particular relationship to build larger, dependent objects, called module objects, covering a broader topic area. The module objects can then be arranged as necessary to build an entire electronic publication or CAI course.

Methods according to the present invention additonally include assembling a plurality of templates for formatting and delivering informational or instructional materials in the form of objects. Appropriate information can be compiled by authors and instructors using one or more of the templates to define a plurality of constituent e-content and/or e-learning objects. In this step, the e-content and e-learning objects are defined such that they include sufficient information to ensure that each such primary object serves as a self-contained chapter or lesson for a particular topic or subtopic within the electronic publication or CAI course, respectively. Additionally, specifically with regard to CAI courses according to the present invention, the e-learning objects defined have an appropriately leveled content for the targeted student. After all necessary e-content or e-learning objects are created, the author or course instructor then arranges a seleted subset of the e-content or e-learning objects, representing topics and sub-topics, into a particular sequence to produce one or more larger publication or instruction objects that cover sections (i.e., module objects) into a particular sequence to define an electronic publication or CAI course. In this manner, the author, publisher or course instructor is able to assemble his or her publication or course from a plan in a modular manner, wherein each constituent object can be modified or removed, or new objects added, independently without changing content pertaining to the rest of the publication or course. Optionally, graphical skins can be applied to a course or publicaton, or to individual objects forming a course or publication, to customize the look and feel of the product to end users.

Additionally, preferred embodiments of the present invention include the use of transition objects to link e-content or e-learning objects, in the form of module objects or individually, into a seamless and logical sequence. For electronic publications, transition objects can include tables of contents or introductions into upcoming chapters, summaries of previous chapters, transitions to segue between a first topic/subtopic and a second related one, and other similar content that ties together multiple e-content objects. Specifically with respect to CAI courses, transition objects can include pre-tests for gauging appropriate content level for a particular student, introductions into upcoming topics, summaries of topics for which instruction has been recently completed, e-learning object transitions to segue between a first topic/subtopic and a second related one, and post-tests/evaluations for gauging how well the student has mastered the material in a topic or course. These transition objects are compiled by the instructor using templates much like as is done for e-content and e-learning objects.

In preferred embodiments of the present invention, the systems, methods and tools permit authors to create transformational publications from existing electronic publications whereby the layout and navigational structure of an original electronic publication is automatically converted to a new layout and navigational structure to produce a transformed publication having the same content of the original electronic publication. In this manner, the operation and structure of an e-content publication or e-learning course can be altered to suit preferences of target end users or to meet delivery constraints (e.g., bandwidth of end user network connections). Additionally, authors and course instructors can change the look and feel of a particular course by applying graphical skins to make any given set of e-learning or e-content objects, no matter when they were produced, have a similar look and feel. In this manner, all of the courses or publications relating to a particular company, group, etc., can provide end users with a consistent appearance and interface layout.

Furthermore, in other preferred embodiments of the present invention, the systems, methods and tools permit authors to automate the process of compiling glossaries of terms contained with the objects included within the course or publication.

Systems according to the embodiments of the present invention include a central network which may comprise an electronically accessible storage media, a server, and software run by the server. The system further includes a plurality of remote client devices, such as personal computers or workstations, electronially connected to the central network. The software is adapted to assist authors, electronic publishers and CAI course instructors by providing an authoring tool for accessing the templates over a distrbuted network from remote locations, such as via the Internet, and adding informational or instructional content using the templates to form new (or modify existing) e-content, e-learning and transition objects. Additionally, the software assists remote authors, publishers and instructors in defining transition objects and compiling various objects into a logical publication or course sequence.

Similarly, in embodiments of the present invention, the software may be adapted to let readers or students access and interact with desired informational and instructional materials by serving the appropriate objects for those materials in a hardware independent page description language via a distributed network, such as the Internet, using appropriate communication software run by the client devices. In preferred embodiments of the invention, the informational and instructional materials are compiled and provided in a standardized format to allow simplified connectivity to the network and accessing of the materials. Most preferably, the materials are compiled into various e-learning or e-content objects which are compliant with various electronic publishing and electronic instructional standards, including the SCORM standard.

The systems and methods according to the present invention will be discussed in more detail below with respect to the drawings and description of several preferred embodiments of the present invention. Particularly, the figures and related detailed description relate primarily to the CAI course embodiments of the present invention, and one skilled in the art will readily appreciate how to adapt the disclosed preferred embodiments for practicing the invention's emodiments as set forth herein and hereafter claimed. Thus, it should be understood that the forthcoming description is merely illustrative and is by no means limiting of the invention as claimed.

### Brief Description of the Drawings

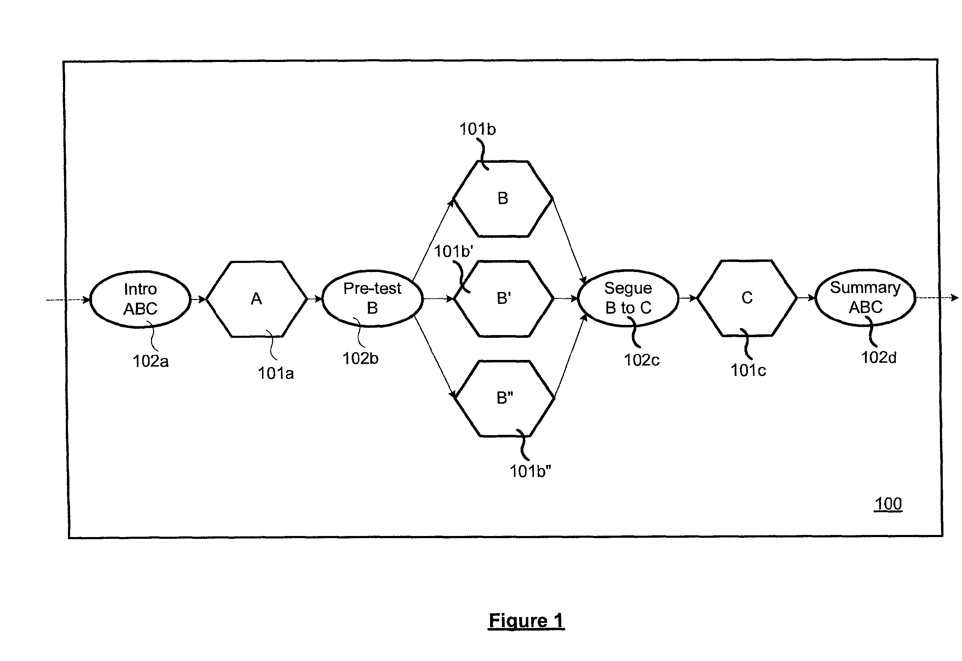

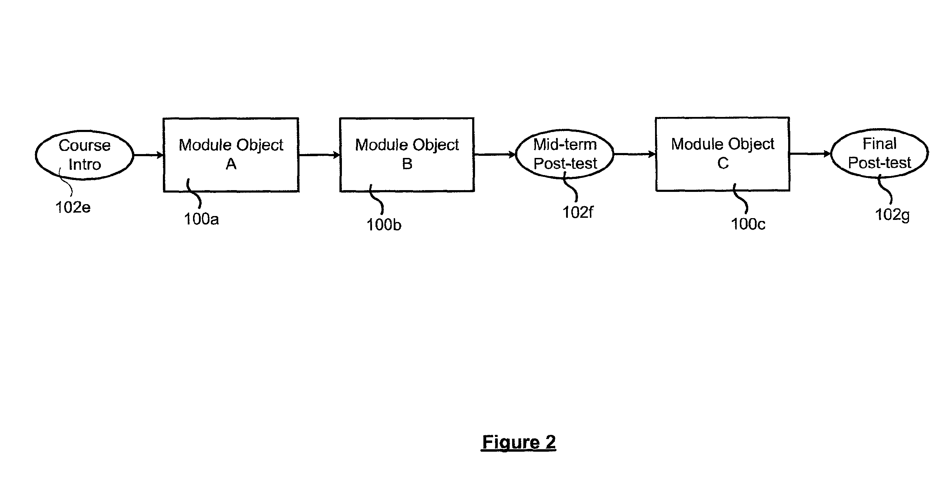

Figures 1 and 2 are schematic diagrams depicting how various objects of different types are used to build a computer aided instruction ("CAI") course according to embodiments of the present invention.

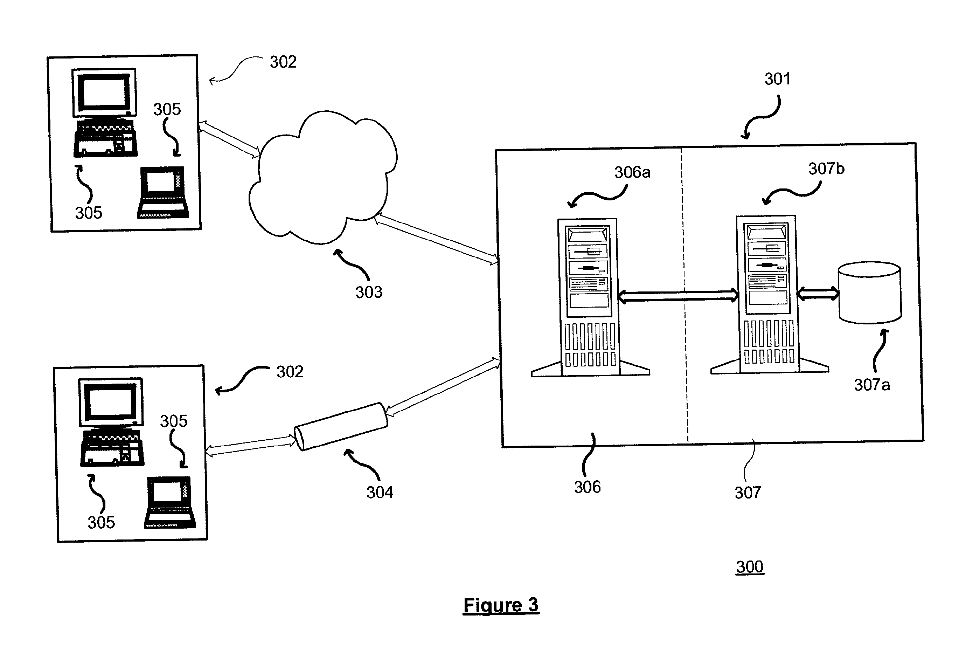

Figure 3 is a schematic diagram of a network system for computer-aided instruction according to embodiments of the present invention.

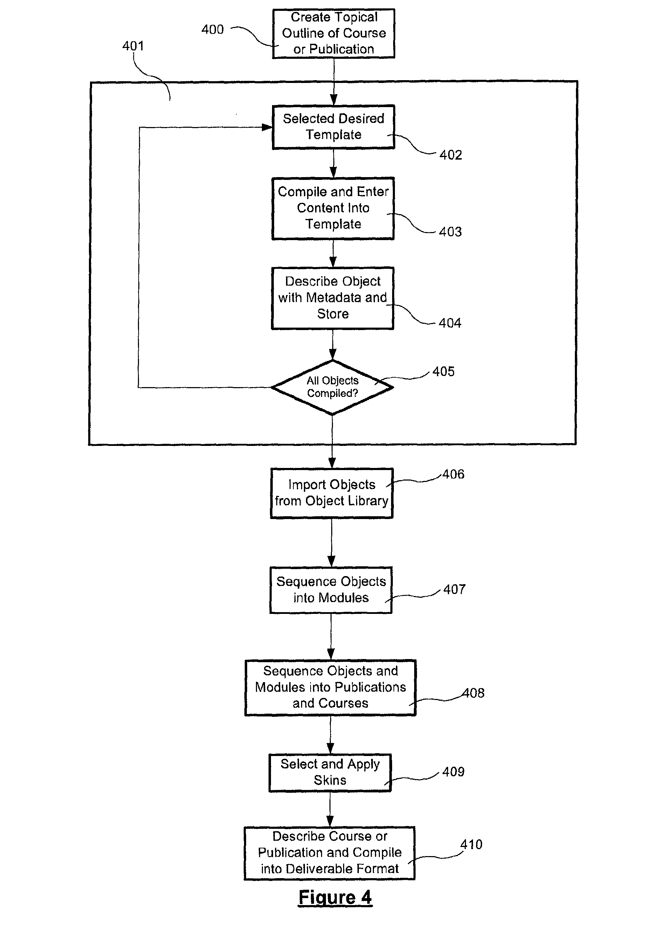

Figure 4 is a flow chart depicting a method for authoring modular objects and assembling the objects into CAI courses according to embodiments of the present invention.

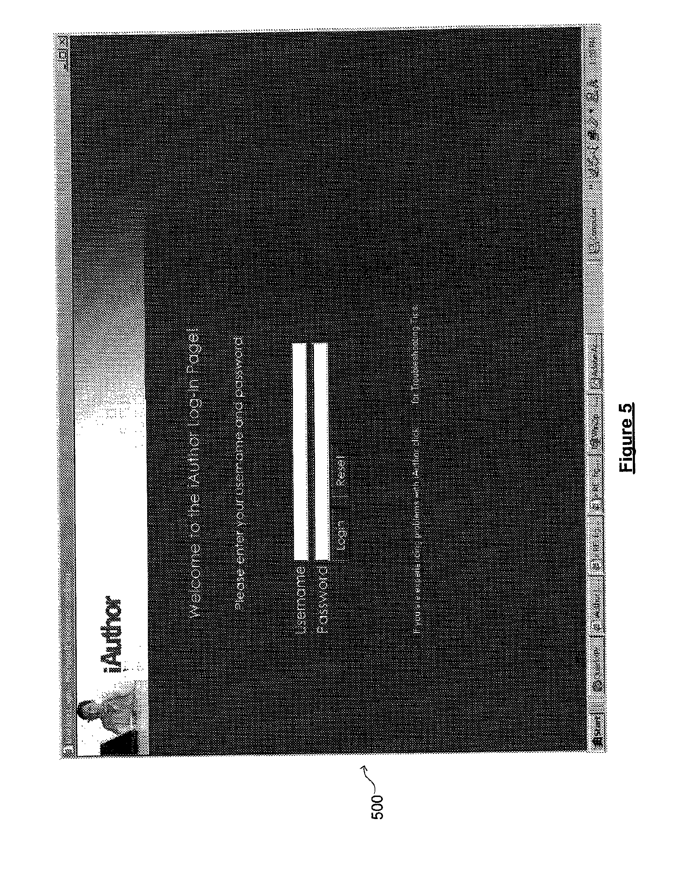

Figure 5 is a depiction of a client computer display as seen by a CAI course author or publisher via a web browser of an exemplary log in web page for electronically accessing the object authoring and administration tools over the Internet according to preferred embodiments of the present invention.

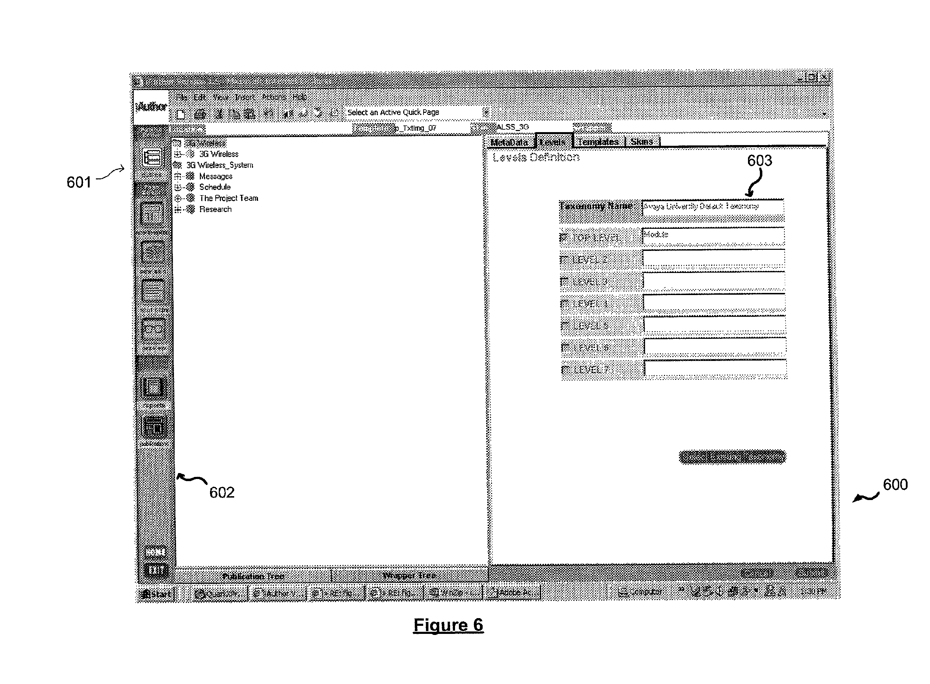

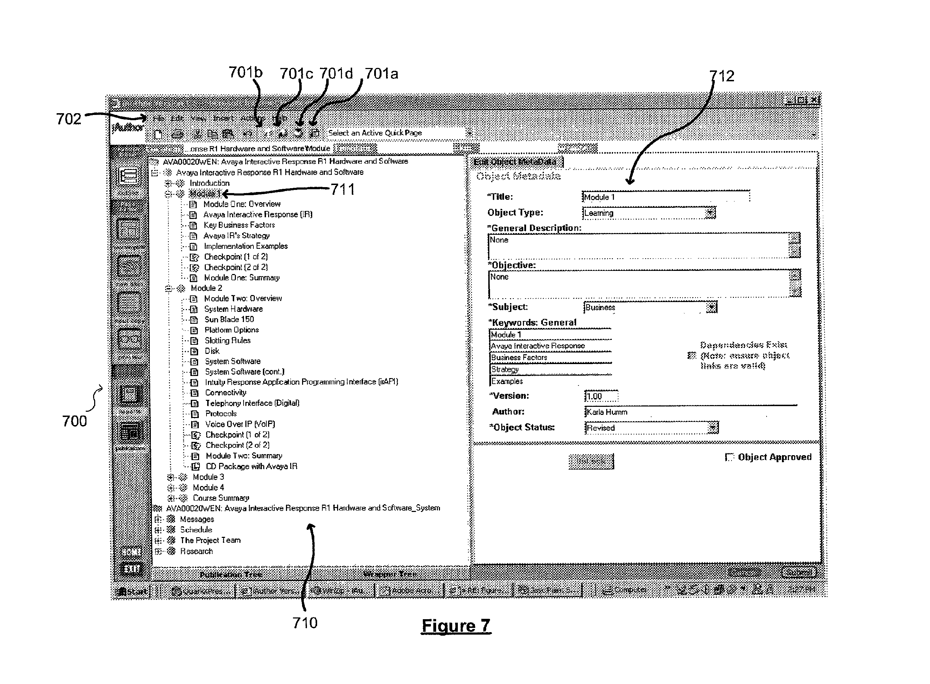

Figures 6 and 7 are depictions of client computer displays as seen by a CAI course author or publisher via a web browser of exemplary web pages for electronically using the object authoring and administration tool over the Internet to define topical levels and topical outlines according to preferred embodiments of the present invention.

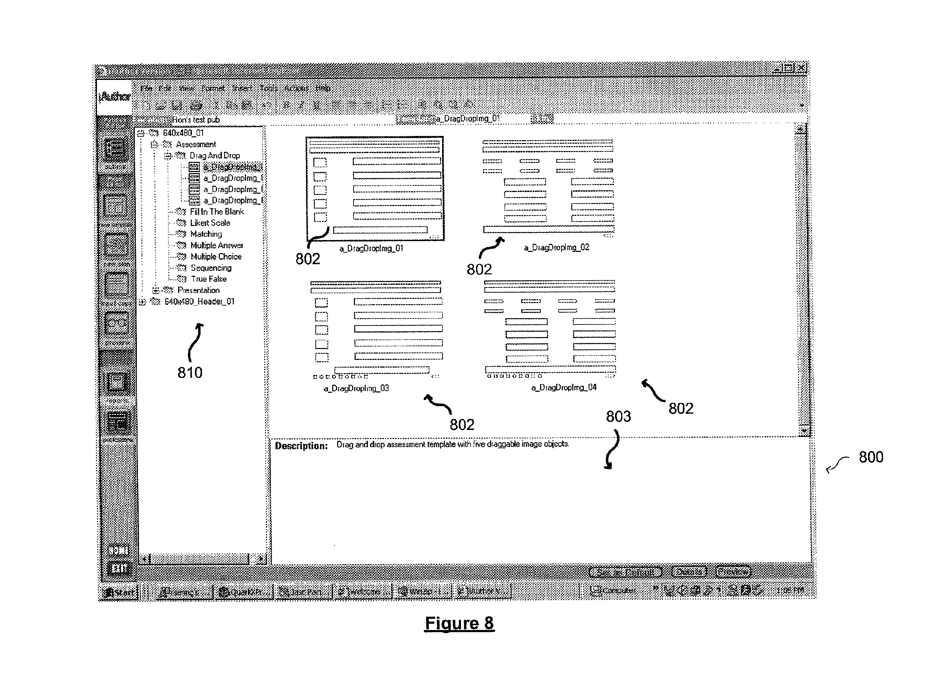

Figure 8 is a depiction of a client computer display as seen by a CAI course author or publisher via a web browser of an exemplary web page for selecting a template with which to create pages for an e-learning or e-content object using the object authoring and administration tools over the Internet according to preferred embodiments of the present invention.

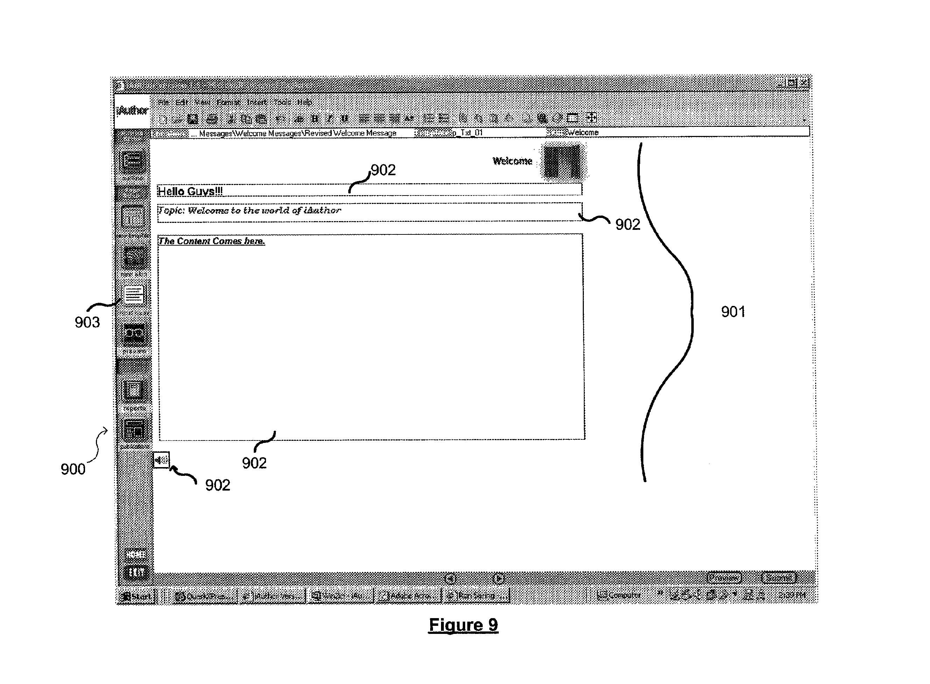

Figure 9 is a depiction of a client computer display as seen by a CAI course author or publisher via a web browser of an exemplary web page for entering content into a chosen template using the object authoring and administration tools over the Internet according to preferred embodiments of the present invention.

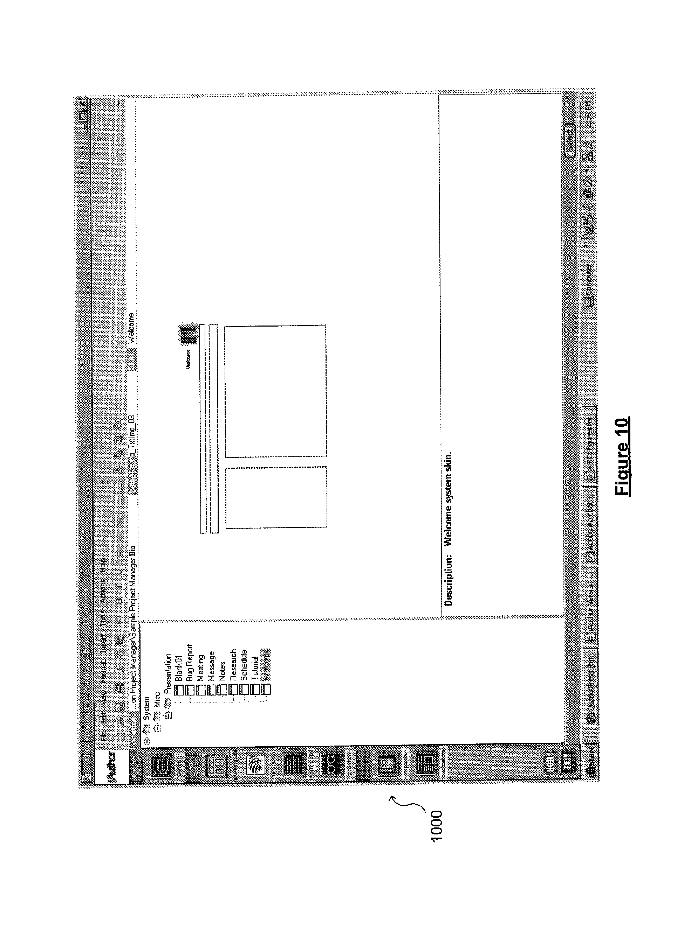

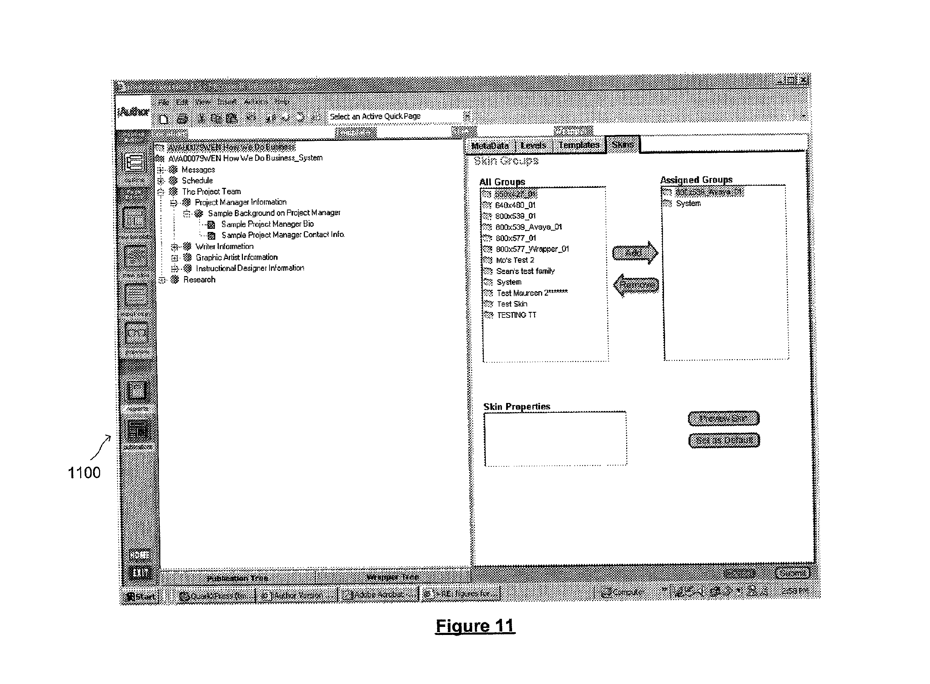

Figures 10 and 11 are depictions of client computer displays as seen by a CAI course author or publisher via a web browser of exemplary web pages for electronically reviewing the library skins and for selecting appropriate skins to apply to one or more objects of a CAI course or e-publication according to preferred embodiments of the present invention.

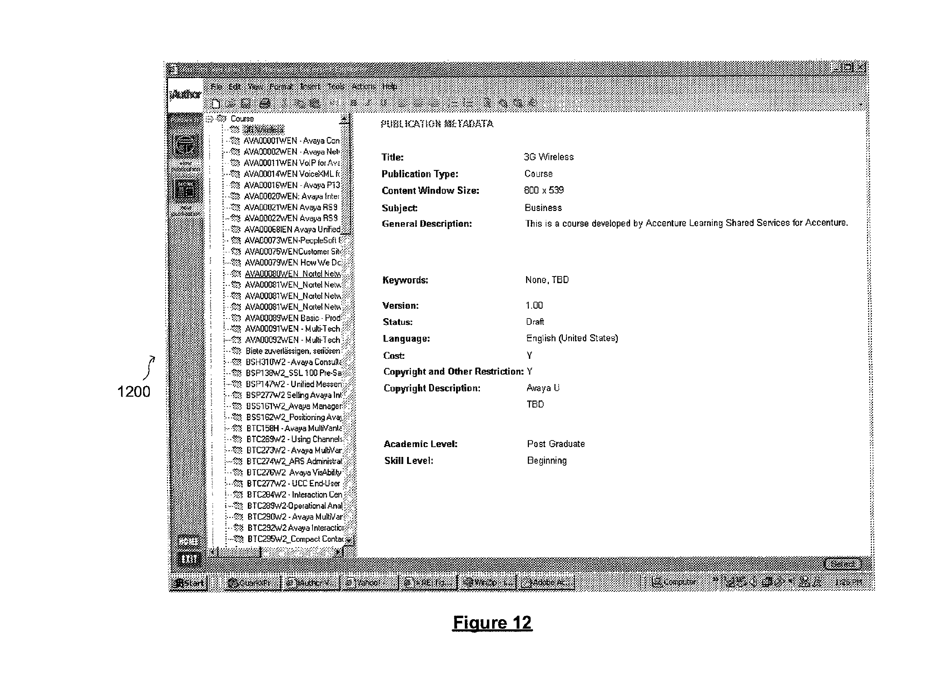

Figures 12, 13, 14, 15, 16 and 17 are depictions of client computer displays as seen by a CAI course author or publisher via a web browser of exemplary web pages for electronically viewing and revising the metadata relating to objects and to publications and courses using the object authoring and administration tool over the Internet according to preferred embodiments of the present invention.

### Detailed Description of the Preferred Embodiments

Referring to figure 1, there is depicted a module (or "topic") object 100 formed from several e-learning objects 101x and transition objects 102y (*x* and *y* being indices designating unique objects from one another). In figure 1, the e-learning objects 101x and transition objects 102y are linked in a particular sequence by the instructor to provide a series of instructional units to students with respect to a particular topic. Figure 2 depicts how several different module objects 100a, 100b, and 100c can be joined together (with or without transition objects 102y) to form an entire CAI course 103.

As will be readily appreciated by one skilled in the art, both e-content objects and e-learing objects are very similar in concept and design in that they both aare primary modular units for compartmentalizing and transmitting knowledge. E-content objects are adapted for containing informational materials while e-learning objects are adapted for containing instructional materials. As described above, providing instruction via electronic media is typically a much more intricate process as opposed to simply providing information electronically. Thus, discussion herein of the self-contained nature e-learning objects, the appearance and use of e-learning objects, and the arrangement of e-learning objects with transition objects to form CAI courses in a modular manner is generally applicable to e-content objects and their use in making electronic publications. For example, an electronic publication according to the present invention could be schematically represented in a manner similar to figures 1 and 2 if e-learning objects 101x were replaced by e-content objects (with, for example, no branching available among e-content objects as is shown with e-learning objects 101b, 101b' and 101b") and transition objects 120y were replaced by appropriate publication transition objects (i.e., pre-tests and post-tests being unneccessary).

An e-learning object according to the present invention is a self-contained, independent and complete instructional unit designed to be transmitted to a student in electronic format. Generally, an e-learning object comprises one or more web pages linked together in a predetermined sequence. Each web page within an e-learning object provides the student with instruction, often in the from of hyperlinked text (with the hyperlinks taking students to other pages within the e-learning object having instruction of interest or otherwise activating or generating additional content as is known in the art of dynamic web page authoring).

Since an e-learning object is self-contained, page-to-page navigation (hyperlinking) within an e-learning object is necessarily limited to content encapsulated within the e-learning object except for one or more "last" pages, which will link to the next object (e-learning or transition) as shown in figure 1. This same feature holds true with respect to all other objects according to the present invention, including e-content, transition and module objects. In preferred embodiments of the present invention, e-learning objects cannot only contain more than one web page, but also more than one series of web pages. For example, a particular e-learning object optionally could have one series that delivers primary instruction and another series to which a student can branch (via hyperlinking) if the object's encoded logic or student decides more reinforcement is needed or desired on a particular idea. As will be readily appreciated by one of ordinary skill in the art, since such a branched e-learning object can have multiple sequences, the navigation controls provided in each e-learning object must be designed to reflect not only what page a student should be navigated to, but also what series within which the page belongs.

E-learning objects according to embodiments of the present invention can incorporate unconditional navigation, conditional navigation, or both within an e-learning object's instructional sequence. Unconditional navigation between pages in a sequence navigates all students to the same place within the e-learning object. Unconditional navigation, which can be accomplished by, for example, selecting buttons presented within a frame in the student's browser, can include the operations of:
- moving forward 1 page sequentially within a series of pages,
- moving backward 1 page sequentially within a series of pages,
- hyperlink to content or a page out of sequence in a given series, and
- go back to previously reviewed content or to the previous page viewed by the student, even if out of sequence (such as is normally done by clicking "Back" in an Internet browser).

Conversely, conditional navigation within a sequence involves navigating a particular student based upon applying particular logic to input or data of each individual student. Types of conditional navigation include:
- backward branching with continuation wherein a student is routed back to previously viewed instructional content, such as a page within a series, due to a determination (such as via a post test) that important concepts were not understood,
- forward branching wherein a student skips over given material at his or her election or based upon pre-test results (in embodiments of the invention, the student could retain the option to review the skipped content at a later time), and
- out of series branching wherein a student is directed to a new series of pages on a previously covered topic in order to provide the material in an alternative (such as more illustrations) manner.

Furthermore, as is known in the art of web page design, navigational elements can be added within an individual page to change the positioning of the cursor within the page or to cause certain effects to occur whenever certain points are clicked upon. For instance, text hyperlinks can navigate a student to text within other parts of a page in a bookmark type fashion. Similarly, hyperlinks can be employed to cause the student's web browser to launch a pop-up window containing related information, such as the definition of a glossary term. How glossary terms can be defined and generated within e-learning objects is explained in detail below with respect to the e-learning objects in general and with respect to the automated remote authoring and administration tool.

According to preferred embodiments of the present invention, e-learning objects are presented using dynamic information presentation techniques whereby instructional content for an entire e-learning object is contained within a single web page file that, when viewed through a web browser, dynamically interacts with a student. As will be appreciated by one skilled in the art of web page design, new viewable content can be displayed in response to user actions within an already-loaded web page using dynamic web page design techniques made possible by JavaScript, DHTML, XHTML and other like languages. Incorporating an entire e-learning object into a single web page file that defines dynamically presented content has the benefit that page-to-page navigation within an e-learning object is not required. Thus, once a particular single web page file that entirely encodes a desired e-learning object is loaded into a student's client device, that student has all the necessary information to receive complete instruction on the particular topic encapsulated by that object. In this manner, an instructional session will not be interrupted by a temporary loss of electronic communication with a remote serving system, and the student is not subjected to many long delays in page loading while navigating between various web pages as would be the case if the desired e-learning object was spread across many files.

Even more preferably, such e-learning objects defined by dynamic web page files are designed such that there is no scrolling required by the student to review materials (text, graphics, links, etc.) that is not completely viewable on the display. All information within any e-learning object according to this most preferred embodiment is presented in a screen-by-screen format that is particularly suitable for instructional materials as evidence demonstrates that the screen-by-screen presentation makes it easier for students to learn in a CAI setting.

A preferred interface for viewing a particular e-learning object as described above utilizes navigational tabs running along the top of the page display as in known in the art. While the tabs in appearance resemble the labeling tabs present along the edge of traditional paper file folders, however, they operate in a manner similar to pull down menus of a computer program and allow the student to select which instructional materials within the current object is being displayed at a given time in the student's web browser. Optionally, by performing a mouse-over with a pointing device cursor over the tabs, the student can see what sub-topics will be taught by the current e-learning object. Such mouse-overs cause descriptive titles of sub-topics within the e-learning object to appear in a dynamically generated pop-up list in which the selection of any title in the list will "navigate" the student to the corresponding content of the e-learning object that covers the selected sub-topic.

Instructional content provided below such tabs also preferably is dynamically changed whenever the student selects a given sub-topic description title from the pop-up navigational list. In this manner, the student can navigate from sub-topic to sub-topic with a selection of any sub-topic description title contained in each pop-up navigation list generated by a mouse-over over each tab causing the display of different relevant content with the e-learning object. Similarly, a student can navigate to view additional instructional content for the sub-topic he is currently viewing using forward and backward navigational arrows (in a manner similar to paging through a chapter in a book), with the presence of one or both of arrows indicating to the student that more material regarding the current sub-topic is available.
Additionally, text hyperlinks and/or buttons can be included wherein their selection (such as by clicking on them) will cause the student's browser to display optional content such as, for example, a more detailed graphical illustration, the definition of a term, etc, or to enable a dynamic instructional element such as, for example, starting the play back of a video clip.

As will be readily appreciated by one skilled in the art, when the student computer interfaces for displaying e-learning, e-content or transition objects employ scrolling web page displays, new content can be added to the bottom of the page display for review by the student using dynamic web page coding similar to that described above. Similarly, with respect quizzes located within e-learning objects, or pre/post-test e-learning objects, the interface can be constructed such that selecting an answer for every question within the test or quiz enables a "submit" button.

Because of the interactive capabilities provided by current web page technology, web page displays used for transmitting e-learning objects (as well as e-content and transition objects) according to the present invention preferably incorporate many web page authoring features to improve student interest and further explain particular points of instruction. For example, interaction with courseware can be simplified by various icons and menus located on each page. Additionally, depending upon the template selected in compiling the course page (as described later), students could be given the option of requesting animation and/or simulation of particular course content. Alternatively, these animations or simulations could be automatically executed whenever a student reaches a particular point (a screen display, web page, the end, etc.) in a given e-learning object. Also, summaries of related topics or definitions of terms could be made to appear in separate pop-up windows by the student simply selecting topic's title or the term with standard hyperlinking methods. In utilizing the above features available in Web page design, the ability of the student to interact with the CAI course is greatly improved.

In preferred embodiments of the present invention, courses or publications comprising such e-learning or e-content objects could provide global editing and revising functions, including global glossary building functions, global text searching and replacement, global look and feel change functions, and layout and navigational transformations. These global editing and revising functions are described in further detail below.

Transition objects, like e-learning objects, are comprised of a single dynamic web page or a series of hyperlinked web pages that perform a particular instructional function. Unlike e-learning and e-content objects, however, transition objects are not independent and self-contained. Transition objects depend upon other objects, whether they be other transition objects, or e-learning, e-content or module objects, to perform their function; that is, to link objects into a seamless and logical course or publication sequence for the student or reader. Transition objects can include pre-tests for gauging appropriate content level for a given sub-topic for providing to a particular student, introductions into upcoming topics, summaries of topics for which instruction has been recently completed, segues between a first topic/subtopic and a second related one contained in separate e-learning objects and post-tests/evaluations for gauging how well the student has mastered the material in a topic or course as well as for determining course grades. These transition objects are compiled by the instructor, author or course administrator using templates much like as is done for e-learning objects in the manner that will be illustrated with respect to figures 5-17 below.

CAI systems and methods according to preferred embodiments of the present invention incorporate a prestored group of transition objects called pre-test objects. Each pre-test type transition object is uniquely associated with a particular e-learning object or module object (containing one or more e-learning objects and/or transition objects). A pre-test transition object contains a plurality of questions or exercises that are directed toward assessing an individual student's understanding of a particular topic/sub-topic, or knowledge pre-requisite to addressing that topic/sub-topic, prior to engaging in instruction with an e-learning object.

Embodiments of the invention can use a particular pre-test object to carry out an automatic evaluation of the student to determine what depth level of information the student should be given. A pre-test object comprises at least one question selected from a battery of questions associated with a plurality of learning objectives for a particular e-learning object(s). The selected question or exercise is displayed to the student who in turn enters a response. The system accumulates the responses and the results of the evaluations for subsequent processing, and uses the responses to select the appropriate e-learning object to display to the student. Suitable pre-test formats preferably include any test questions that can be objectively graded (this feature lending itself to automated computer grading) including, but not limited to, questions requiring quantitative answers, multiple choice questions, matching questions with itemized answers, and true-false questions.

As shown in figure 1, pre-test transition object 102b is placed in sequence between e-learning object 101a (containing self-contained instructional content relating to sub-topic "A") and e-learning objects 101b, 101b', and 101b". Pre-test transition object 102b, when accessed, triggers a series of exercises on the student's client device which request input from the student and thereby determines what level of background understanding the student has for sub-topic "B." Depending upon the results of the pre-test, a student is seamlessly routed to one of either e-learning object 101b, 101b', or 101b" such that the student is given appropriately leveled instructional content (e.g., 101b giving instruction appropriate for a novice, 102b' appropriate for a person with some familiarity, and 102b" appropriate for a person with working knowledge) .

An introduction transition object as used in preferred embodiments of the invention provides a preview or introduction to a group of the module objects in a course or e-learning objects in a module object sequence. As such, they depend upon a particular orientation of other objects such that they often would have to be modified if the content of objects from which they depend are modified (or similarly if a particular e-learning object is entirely removed from a module). Understandably, introduction transition objects are typically placed at the beginning of a sequence. As shown in figure 1, introduction transition object 102a serves as a preview of sub-topics "A," "B" and "C" contained in the e-learning objects 101x forming a given module 100. Similarly, as shown in figure 2, introduction transition object 103e serves as an introduction for all of CAI course 103.

Additionally, in preferred embodiments segue transition objets are used to make the transition from one e-learning object to another more streamlined and less noticeable to a student taking a modular CAI course. Since e-learning objects are self-sufficient and compartmentalized, they have the advantage that they can be provided in any sequence. Often, however, it is necessary to help tie together related sub-topics covered in separate e-learning objects to provide complete instruction. Segue transition objects are used in such cases. As seen in figure 1, segue transition object 102c ties sub-topic B to sub-topic C, and thus is located in sequence between e-learning objects 101b, 101b' and 1001b" and e-learning object 101c. In such a case, the student is provided with an understanding regarding how the upcoming instruction relating to sub-topic C relates to the previously completed instruction relating to sub-topic B.

An additional type of transition object employed in preferred embodiments of the present invention is summary transition objects. Summary transition objects provide a brief synopsis of a group of the prior module objects in a course or e-learning objects in a module object sequence. As such, like all other transition objects, they depend upon a particular orientation of other objects in that they often would have to be modified if the content or relative placement of objects from which they depend are modified. As shown in figure 1, summary transition object 102d, as is typically the case, is placed at the end of a series of e-learning objects.

Post-test transition objects are also used in preferred embodiments of the present invention to gauge how well the student has mastered the material in a topic or course and for determining course grades. In operation, they work much like pre-test transition objects and can comprise similar types of questions. The results obtained by these objects can be stored in a test results database accessible by the instructor and subsequently used for course management purposes such as for dynamically routing a student back to a particular e-learning object for review or for grade determination. In figure 2, a post-test transition object 102g is shown as serving as a final examination for CAI course 103. Similarly, post-test transition object 102f serves as a mid-term examination for CAI course 103 covering the topics in module objects 100a and 100b, but not the topics in module object 100c. Suitable post-test formats preferably include test questions that can be objectively graded (like pre-test transition objects) as well as open-ended questions that require subjective grading (as they don't necessarily need to be graded by computer).

Similar to manner utilized with respect to instructional content as described above, quizzes located within pre-test or post-test transition objects can be constructed incorporating dynamic web page generation techniques such that selecting an answer for every question within the test or quiz enables a "submit" button. Such dynamic web page techniques may also allow displays for students to track answers to previous questions, for reviewing and changing previously selected answers, and for skipping and returning to skipped questions later in a given test.

As will be readily appreciated by one of ordinary skill in the art, the sequence and grouping of objects according to the present invention can be made in many ways and still equivalently deliver appropriately leveled instruction. For example with respect to the module object depicted in figure 1, instead of e-learning objects 101b, 101b' and 101b" all sequencing back into e-learning object 101c through transition object 102c, after pre-test transition object 102b the student could be split off onto one of three different independent sequences. Alternatively, of course a pre-test can be included within an e-learning object using dynamic web page construction whereby the entirety of the instructional materials present in e-learning objects 101b, 101b' and 101b" are instead encoded in a single e-learning object that provides branching navigation within the object to enable the delivery of various levels of content as described above.

Referring to figure 3, there is depicted one embodiment of a CAI network 300 for providing CAI to a plurality of users (e.g., students, instructors, or course administrators) located at various remote client devices 305, such as workstations and personal computers. As shown in the figure, CAI network 300 comprises a plurality of smaller sub-networks interconnected over various electronic communication mediums, including the Internet 303 and local area networks ("LANs") 304. These sub-networks include, at the back end, a central CAI network 301, and, at the front end, one or more client networks 302.

Typical within large organizations, such as corporations, universities, and government agencies, is that computer networks, such as the one depicted in figure 3, consists of hundreds or even thousands of computers. These computers may be connected in a myriad of different ways and using various technologies and protocols as are or will become known in the art. Another typical feature of computer networks is that the type of computers or workstations that make up the network varies widely at the client network 302 level. Therefore, it is important that the client computers, regardless of their make and platform, be able to communicate with the central network. The present invention is cognizant of this fact, and therefore preferably employs standard Internet network protocols (TCP/IP, HTTP, FTP, etc.) to ensure that all course instructional information can be transferred to all types of client devices 305.

Referring again to figure 3, a central network 301 according to this illustrative embodiment further comprises a database system 307 and a Web serving system 306 that are in electronic communication with one another. The Web serving system 306 comprises one or more Web server machines 306a and support electronics as are commonly used in the field to run platforms for Web servers. For example, the platforms can be of any suitable variety, such as UNIX, Linux, or Windows NT, operating on commercially available server hardware, such as a SunServer, Compaq Proliant or Dell Dimension.

In preferred embodiments of the present invention, the central network 301 is based on a Windows NT server based architecture communicating with an ODBC-based database system 307 that runs in either a Unix or NT environment. Using this preferred configuration, the web applications are adapted for a Microsoft IIS 4.0 web server running on a Windows NT 4.0 or a Windows 2000 Professional network. Generation of page requests to the web server system 306 are preferably handled using on-the-fly web page code generation supported by Microsoft ActiveX, Active Server Pages ("ASP") scripts or CGI scripts as is known in the art.

The database system 307 of central network 301 is designed to store information relating to registered students, authors, administrators, electronic course content and electronic course instruction, and is electronically connected to Web serving system 306, such as via an internal LAN. Preferably, the database system 307 comprises one or more relational databases 307a, with each database storing its information in any manner known in the art, such as directly on the network server hard drive or on external storage media such as tapes, CD-ROMs, external hard drive or optical disks electronically connected to and accessible by a database server 307b, such as an SQL server. In a preferred embodiment of the present invention, the databases 307a include a student information database, a servable content database, an author database, and an authoring content database. Alternatively, of course, the combining of the above databases into a fewer number of databases can be done while still achieving the general purpose of the database system 307.

Preferably, the databases 307a are SQL databases (such as version 7.0 or later). All database queries are issued through ASP by the server system 306 and are mediated by a Common Object Model ("COM") business objects. Database queries are executed in the database system using ActiveX Data Objects ("ADO") and Open Database Connectivity ("ODBC") so that the applications can run in any ODBC compliant database environment. The database system preferably houses all content data, including text, graphic and media needed to create any object.

While it is possible, of course, to install both the database serving and the web serving software on the same physical device, generally it is recommended that a separate machine from the web server 306a be used as a database server 207a as depicted in order to optimize performance. In addition to a web server 306a and a database server 307b as shown in figure 3, other servers may be needed in alternative embodiments depending upon the nature of the content being compiled with the administration tool. For example, a reporting system could use a Crystal Reports web server or other dedicated reporting server to enable generation and delivery of administrative reports via the web. In such embodiments, the reporting web server would need to be installed in the server system 306. Additionally, depending on the nature of the instructional or informational materials present in the objects, streaming media servers may be needed in order to fully use the preview functions of the system. For example, full support for the use of Real Audio and Real Video or other like streaming media content within objects would require the addition of a suitable streaming media server within the central network 301.

In the preferred embodiment described above comprising four databases, the student information database contains administrative information specific to each student who is registered to take instructional courses on CAI network 300. Such information could include any information typically stored in a learning management system regarding students, including information relating to the identity of each student, the courses in which each student is enrolled, passwords and logins that identify each student on the network as well as allow remote access, course progress indicators that identify how far along a student is in a given course in which he or she is enrolled, CAI course test scores, etc.

The servable content database in this preferred embodiment contains the compiled web pages for every CAI course available to any student. These web pages each contain the course content and instructional information for a particular CAI course as was previously built by one or more course authors. Thus, this servable content database would contain the servable HTML code (or other suitable page description code) describing the web pages, as well as any written text, links, illustrations, and video or audio clips referenced by the HTML code, that had been approved and ultimately need to be available for serving to students via the web serving system 306. As such, the servable content database is accessed (by the web servers using, for example, ASP or CGI scripts) in response to instructional page requests made by student-operated client devices.

The author database in this preferred embodiment of the present invention is similar to the student information database in that it largely serves as a repository of information regarding authorized users who may use remote authoring and administration tools to create courses and publications as described herein. This author information can include, for example, password and user ID information, access privileges to course, publication and object libraries and the like as will become apparent after reading the description that follows.

The authoring content database contains all the libraries of objects, topical outlines of previous publications and courses, templates and skins that may be used by authors to create publications or courses according to the present invention. This authoring content database also contains the raw constituent instructional or informational content, such as written text, links, illustrations, and video and audio clips that may be included in any previously-created or in-development object stored in the network, as well as layout information (such as the arrangement of such constituent content into templates and skins as will be described below) for each object. The content database would also contain a metadata library describing a library of all objects as well as information pertaining to the manner and sequence in which particular objects are logically connected to form a previously created CAI course or e-publication. As such, the servable content database is accessed (by the web servers using, for example, ASP or CGI scripts) educational publishers and authors in the form of requests to update a particular object's content or rearrange the number or sequence of objects within a CAI course or e-publication as described below.

As will be readily understood by one of ordinary skill in the art, the above described database structure can be modified in many ways without departing from the present invention. For example, all information necessary to operate central network 301 could optionally be maintained in a single combined database or any number of databases. Similarly, certain information, such as, for example, advertisement image files, links to outside information sources, or data feeds from independent real-time information providers (all not being shown in figure 3, can be located external to the database system 307, and the network system 301 in general, and accessed via the Internet through HTTP requests. Figure 3 only shows one such way in which the relatively small number of computing and networking resources shown therein can be connected. A person of ordinary skill in the art will readily appreciate that the present invention is in no way limited to the number of computers or sub-networks depicted in central network 301 or how these computers and sub-networks are inter-connected in the figure.

In practice, a student, instructor, or course administrator uses a client device 305, such as their personal computer, to connect to the central network 301 through their local client network's server over Internet 303, LAN 304 or other similar network connections. Web serving system 306 in central network 301 receives communication, in the form of page requests, from client device 305 and responds to this communication by accessing and supplying the appropriate web pages from database system 307.

Web serving software running on the Web server 306a essentially creates the web pages as they are requested by obtaining the appropriate data from the database system 307 and serving that data (using the proper communication protocol such as HTTP or FTP) as may be encoded in any suitable page description or web scripting language (HTML, DHTML, XHTML, XML, JavaScript, etc.).

Since standard SQL databases are not directly accessible with HTTP based requests, a variety of front-ending tools, such as may comprise ASP scripts or CGI scripts, are incorporated within the Web server software. Accordingly, these front-ending tools operate as extensions to the Web server software in that it allows students to request, and authors/instructors to add or update, particular information stored in the various portions of database system 307 all using the Web (or a Web-like) graphical user interface. Preferably, the software and its front-ending tools communicate with database 307a through database server 307b through SQL or another suitable data access language and interfaces.

The above-described system thus provides a seamless appearance to end users of e-publications, such as students. When a student user initiates instruction by "visiting" a particular Web page in a particular e-learning object, the student is served by the server system 306 a Web page on his client device 305 in a page description language such as HTML or XHTML. The student interacts with the page, receiving instruction and making navigation selections or requests as is known in the art. These selections or requests, although they may not appears as such to the student, are in effect web page element requests, e.g., URLs, that access a page or page element directly or that call an ASP or CGI or other (such as JavaScript and VBScript) script to perform processing. The result of the selection or request may be a web page eliciting a further selection or request, or providing the desired information content.

Upon the central network 301 receiving a particular URL request from a client network 302, the server system 306 looks up the appropriate information in the database system 307 through commands sent by software. The software then builds the requested web page in HTML code combining appropriate content as stipulated in the databases 307a.

In embodiments of the present invention, authors, publishers, and course instructors and administrators can also preferably contact the central network from a remote location and use an automated remote authoring and administration tool (sometimes referred to herein simply as the "authoring tool") to remotely and independently manage the informational or instructional materials present in any e-learning, e-content or transition object. Preferably, they would be able to access the automatic publishing tool of the software remotely, such as via the Internet 303, with a web browser on a continuous basis. Figures 5-17 depict views as seen via a web browser, of a sample web pages 500-1700 through which appropriate users could access the automated remote authoring and administration tool in embodiments of the invention. These figures will now be discussed to help illustrate the operation and features of the authoring and administration tool.

The authoring and administration tool according to the present invention preferably comprises and integrated set of ActiveX and OLE custom controls ("OCX"), preferably operating in the form of a small plug-in application operating integrally with a client web browser. This OCX architecture specifically addresses object assembly into publications or course, object creation and editing, and system reporting. Of course, it should be understood the authoring and administration tool according to the present invention can alternatively operate using solely JavaScript forms that are supported by the most common web browser applications such that no plug-in applications are required. However, by using a multiple OCX architecture, the download size of the authoring and administration tool for the client devices is kept relatively small and run-time performance of the tool over the Internet or other distributed network is enhanced.

Referring to figure 4, there is shown a schematic flow chart depicting a method for authoring modular objects and assembling the objects into CAI courses or e-publications according to embodiments of the present invention. The method may be carried out by authors, publishers, course instructors and course administrators using the author tool as described herein. Before beginning the compilation of instructional or informational content into objects or modules, and before the arrangement of those objects and modules into courses or publications, however, it will be understood that course administrators, publication authors, etc., must first receive information and make strategic decisions regarding basic requirements of the course or publication. These requirements can include general goals and guidelines, testing or certification requirements for target students, time or length requirements of the publication or course, identification of topics that should be covered, targets regarding the level of depth for given topics, and information relating to any relevant previously existing publications, courses, objects and other useful content.

Also, when using the authoring tool according to embodiments of the present invention, a course instructor or publication author would connect to the central network using a client device, such as via the Internet, and log in to the system to initiate the method of figure 4. Figure 5 depicts a client computer display as seen by a CAI course author or publisher via a web browser of an exemplary log in web page 500 for electronically accessing the object authoring and administration tools over the Internet according to preferred embodiments of the present invention. An electronic author, publisher, CAI course instructor or administrator could access such a web page remotely with a web browser over the Web by entering the proper uniform resource locator ("URL") in the manner as is known in the art.

A given author, course administrator, etc., would be identified by the central network (with which the authoring tool is communicating) according to his or her user ID and password pair as entered into login web page 500. (This user ID and password pair information being stored in the database system, thereby identifying, and defining the appropriate rights and permissions for, valid users.) In this manner, particular users of the authoring tool could be provided with access to only certain content, object, template, skin and/or publication libraries (or portions thereof) according to permission set by a duly authorized network administrator of the central network. Thus, many multiple users working on distinct projects can be supported by a single central network.

Once an author logs in by entering his or her proper unique user ID and password pair, the author begins the process of creating a modular CAI course or e-publication according to the present invention by first creating a topical outline, step 400 of figure 4 (this outline may equivalently be called a publication topical outline in the specific case of e-publications and a course topical outline in the specific case of CAI courses). This topical outline would reflect requirements of the course or publication as seen by the author and comprise identification of modules (e.g., chapters corresponding to sub-topics) and objects. Figures 6 and 7 are screen shot depictions as seen by an author via a web browser of exemplary web pages according to preferred embodiments of the present invention by which an author may use the object authoring and administration tool over the Internet to create a new e-publication or CAI course by defining the levels for a new course/publication (figure 6) and then define a general topical outline of the course/publication within the defined levels (figure 7). As seen by web page 600 in figure 6, the author, instructor or publisher (hereinafter collectively referred to solely as the author) has chosen button 601 on web page toolbar 602 to begin creating a new publication outline and has been presented with a JavaScript form 603 for defining subject matter levels within which will be created an outline to apply to the entire course. The number of levels are flexible, and may be appropriately defined by the author as necessary to most effectively organize to course or publication into various topics and sub-topics (and thus various individual objects of different types).

Figure 7 depicts a display of a web page 700 adapted to provide an author with a completed topical outline 710 having multiple levels (corresponding to the relative arrangement module objects, e-content/e-learning objects, and transition objects to form the course "Interactive Response R1 Hardware and Software"). A particular block location 711 (occupied by module object "Module 1") is highlighted, causing the web page 700 to dynamically display in form 712 the metadata describing that block/object and provide the author with the capability to review (and potentially edit, if desired) that metadata. In the displayed web page 700 illustrated by figure 7, the highlighted block location corresponds to a module object of the "Learning," signifying that the e-publication is in fact a CAI course. An editing toolbar 702 runs along the top of the displayed web page 700 and provides standard editor and window functionalities as are known in the art. Additionally, a set of authoring function buttons 701 is provided to help the author edit the current publication or course. Selection of the buttons will allow the author, for example, to add a page to a existing e-learning, e-content or transition object (button 701a), to add a block to the outline (button 701b), to create a new object (button 701c), or import an existing object from the object library and into the course being currently edited (button 701d).

Referring again to figure 4, after the course outline has been defined it is necessary to locate or create the appropriate objects and arrange e-learning objects according to the course outline into modules to form the course. Understandably, the author may need to create one or more new objects. Thus, after the creation of the topical outline at step 400, sub-process 401 is begun whereby new objects are created and stored in the object library database with previously created objects. The first step in creating new objects according to sub-process 401 is the selection of an appropriate object template 402 from those made available by the authoring tool. A library of appropriate templates are stored centrally in the database system and allows the author to chose from various alternative ways for laying out the content in a given object. The number and type of templates made available to a given author may be controlled by the network administrator of the central network (i.e., personal libraries could be defined for each registered author).

Figure 8 depicts a display of a web page 800 provided by the authoring tool for accessing the library of templates and reviewing and selecting appropriate templates for a given page or pages of an object. Referring to figure 8, the web page 800 depicted therein provides the author with a list 801 of available templates. This web page 800 could be reached by the author, for example, by selecting the button "New Template" located to the left of the displayed course outline 710 on web page 700. Optionally, this could be done after selecting (i.e., highlighting) the object in the course outline 710 to which the template will be applied. Once a particular template or family or templates is selected from the list 801, a display is provided in the web page 800 to the right of the list 801 demonstrating thumbnail sketches 802 of the selected template or template family. (As shown in figure 8, the highlighted family of templates selected in list 801 pertains to assessment-type transition modules of the "drag and drop" variety.) Highlighting a desired thumbnail sketch 802' provides the author with a description 803 of the template represented by the thumbnail sketch to assist the author in identifying the best template for the type of object that is desired.

Understandably, certain templates would be particularly adapted for providing certain types of information while others would be adapted for different approaches. On their most basic level, templates can be classified according to their purpose and the type of content they will hold. Specifically, there will be families of templates that are adapted to instructing or providing content while others will be adapted to administer assessments such as pre-tests and post-tests. Similarly, certain templates will be especially adapted to hold multi-media content (and, more specifically, multi-media content of a specific type, such as video or sound) while others will just deliver text content. Further, various templates can differ by producing web objects that utilize static Web content presentation, dynamic Web content presentation, or combinations thereof.

Additionally, different families of templates could use competing navigational conventions or paradigms, such as selectable "Next" and "Back" buttons, a "tabbed file folder" layout having selectable labeled tabs at the top of the page for accessing content pertaining to the topic indicated by the tab's label, and a table of contents layout whereby a selectable contents menu is continuously provided down the left side of the display allowing the user to directly navigate from topic to topic.

Optionally, the author could be provided with the ability to access one or more different libraries of templates. For example, a template library web page could be accessed by the author to add templates or template families stored in the database system to the list 801 of available templates provided by web page 800. Such a template library web page could be reached, for example, by the author selecting a "Modify active templates" option at any time from an appropriate pull down menu in the toolbar of a given web page.

Once the desired template is identified using appropriate web pages provided by the authoring tool, the author must then enter the appropriate data or content into the object at step 403. Figure 9 depicts a display of a web page 900 provided by the authoring tool after the selection of a template to allow the author to fill in the desired instructional or informational content. As depicted in figure 9, the web page 900 provides the author an empty template 901 having various entry portions 902 (initially left blank) into which can be placed various types of content, including, in the case of the type of empty template 901 depicted in figure 900, a title, a subtitle, written text and a sound bite. As described above, the relative layout of the blank portions 902 and the type of information that are intended to contain varies from template to template. Web page 900 could be reached from web page 800 by, for example, the selection of button "input copy" while highlighting the chosen template. As indicated above, various templates within a template family can be adapted to organize and deliver various combinations of the different types of electronic informational and instructional content, including text, sound, graphics, animation and video.

Instructional and/or informational content can be entered into the chosen template at step 403 according to various manners known in the art of document and web page editing, including manual text entry into the template, insertion of various file-types into the template, and cutting and pasting from other local computing applications.

Notably, the use of "dynamic" templates instead of "static" templates by an author to create the pages of an e-learning or e-content object provides that author with a straightforward mechanism to prepare dynamically presented web page content. Dynamic templates, such as for web pages using the tabbed organizational and navigational paradigm, during content inputting step 403 could provide the author with an intuitive authoring interface wherein clicking on tabs, table of contents entries, or other similar dynamic content display navigational means would provide the author with an inteface for entering the appropriate informational or instructional content.

After the author has completed entering content into the template, he or she is prompted to describe the object with metadata such that it can be properly stored in a data object library located in the central network. The metadata entered at step 404 assists in the necessary tagging and cataloging of the objects to simplify their storage, retrieval, and later incorporation into electronic courses or publications and thus for ultimate delivery to end users. The tagging and cataloging of the individual e-learning and e-content modules and storage in a centrally accessible object library database in turn facilitates their reuse between and among various electronic courses, publications, and future object design. In this manner new publications or courses can be created from (at least in part) previously existing objects and modules in a simplified manner without having to reinvest resources and time into assembling and compiling the same instructional and informational content or instructional and informational content of a similar scope into an electronically deliverable format.

Once an object is compiled and fully described using metadata at step 404, the object is uploaded for storing in an object library database. Preferably, each object in the object library database is formatted or versioned so as to be compliant with industry standards of electronic learning content delivery (such as the SCORM standard which requires XML coding to define electronic instructional content). Once it is determined at step 405 that all necessary new objects have been created, sub-process 401 is complete and the process proceeds to prepare the course or publication according to steps 406 - 409 as described below.

Once a sufficient library of e-learning and transition objects have been compiled, the author is then ready to sequence various primary objects into modules, and then modules into complete courses. Obviously, it is possible according to the present invention that sub-process 401 could be skipped entirely if a desired new course or publication could be compiled completely from pre-existing objects located in an available object library database. Using the authoring tool, the desired objects are identified within, and then imported for use from, the object library database at step 406. These imported e-learning objects and appropriate transition objects are then sequenced by the author into various modules at step 407, and then those modules are in turn sequenced (with or without transition objects and other objects) into the course or publication at step 408 by "filling in" the topical outline. The sequencing and ordering of various object and modules in this way was previously conceptually depicted and described with respect to figures 1 and 2 above.

Referring back to figure 4, once the objects and modules have been sequenced at step 408 a skin is selected at step 409 for application to one or more objects of the course or publication (or, optionally, to the whole course or publication). A library of various skins for customizing the style (such as fonts and colors) of CAI web pages are previously assembled and made available for the creation of objects with the automated remote authoring and administrative tool. As is known in the art of web page design skins are graphical design elements that can be applied to web pages to change the look and feel of the pages without changing their content. For example, a skin could be applied to a web page to make it utilize particular fonts and color schemes and to display certain logos in order to brand the publication or course as being produced by a particular author or organization to which the author belongs. In web page design, skins can be accomplished, for example, by employing cascading style sheets. Figures 10 and 11 depict displays of web pages 1000 and 1100 that are accessible with authoring tool to review the library skins and for selecting appropriate skins to apply to one or more objects of the current course.

The method of figure 4 concludes after the selection of the appropriate skins and the application of those skins to the objects with step 410. At step 410, the author describes the course or publication and then compiles the course into a deliverable format. As is the case with objects as described above with respect to step 404, the author also describes the finalized course or publication with metadata to facilitate its storage and cataloging in a library of completed courses and publications. This metadata is stored in the database system of the central network along with the layout and properties (e.g., identification and sequencing of objects, skins, etc.) of the completed course or publication to the central network for storage in the database system such that the publication can be reviewed and revised at a later date. Additionally, the course or publication is compiled into a deliverable format (typically, into web pages described by HTML) and stored in the database system so as to be accessible to end user (e.g., students) as described above with respect to figure 3. In this manner, a deliverable version of the publication or course is ready for accessing by end users and, simultaneously, a modular version of the publication or course is still available for subsequent retrieval by the authoring tool for editing.

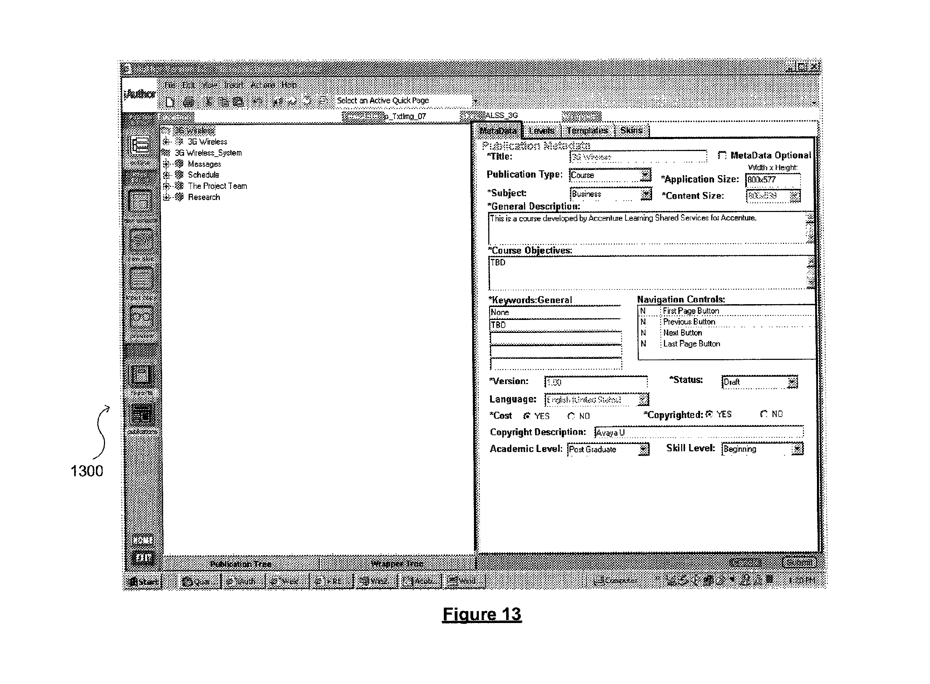

Figures 12 through 17 are screen shot depictions as seen by a CAI course author or publisher via a web browser of exemplary web pages 1200, 1300, 1400, 1500, 1600 and 1700 for viewing and revising the metadata relating to objects in object libraries and publications in publication libraries as performed using the object authoring and administration tool over the Internet. As depicted in figure 12, web page 1200 provides an example regarding how an author may retrieve the information and review the metadata regarding a draft or finalized publication that is stored in a publication library. As is apparent from the figure, the publication, once selected in the library tree to the left of the display in web page 1200 (such as by highlighting the desired publication in the library tree) causes the associated metadata of the publication to be displayed in the right portion of the window (where the metadata indicates, among other things, that 3G Wireless is a CAI course regarding Business subjects at the Post Graduate level). If, for example, the author wished to review the metadata of objects comprising the highlighted publication or other information regarding the highlighted publication, and possibly to modify the publication, this could be done by selecting the "view publication" button located on the toolbar to the left of the library tree and cause the web page 1300 of figure 13 to be displayed.

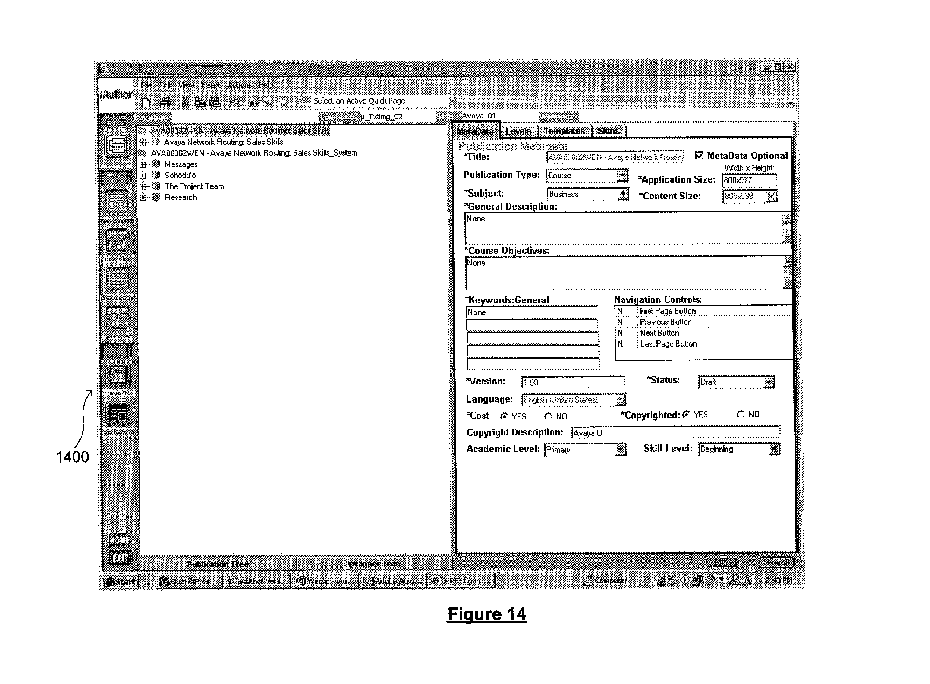

Figure 13 provides an author with the ability to see the modules and objects comprising the publication (using the publication tree to the left) as well as review and edit the metadata of the selected publication. Figure 14 depicts a similar example of a web page 1400 by which an author may review, and potentially edit, the metadata of an entire publication. In the example of figure 14, the publication is also a CAI course, entitled "AVA0002WEN - Network Routing Sales Skills," but this time is targeted to a "Primary" level audience.

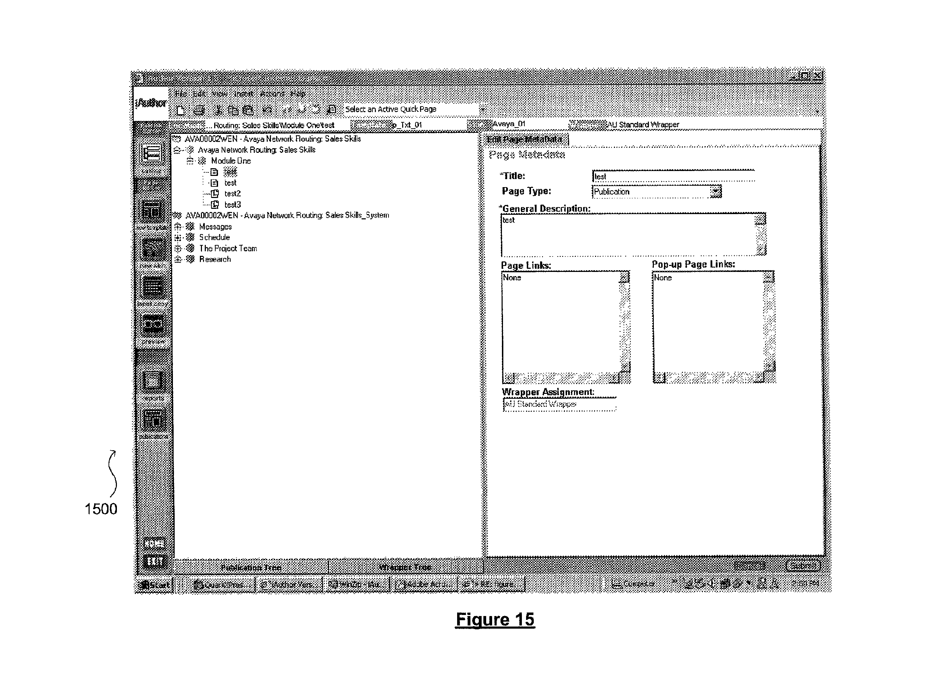

Figure 15 depicts a web page 1500 as seen via a web browser for accessing the metadata for the constituent objects of a course, and, in particular, the course whose metadata is being displayed in figure 14, according to one exemplary embodiment of the present invention. As depicted in figure 15, the library tree on the left of the display may be drilled down by the author to display the metadata for constituent objects that make up a publication of interest. In figure 15, the author is being provided with a display of metadata pertaining to a page "test," which is a constituent portion of the object "Module One," which in turn is a constituent portion of the course.

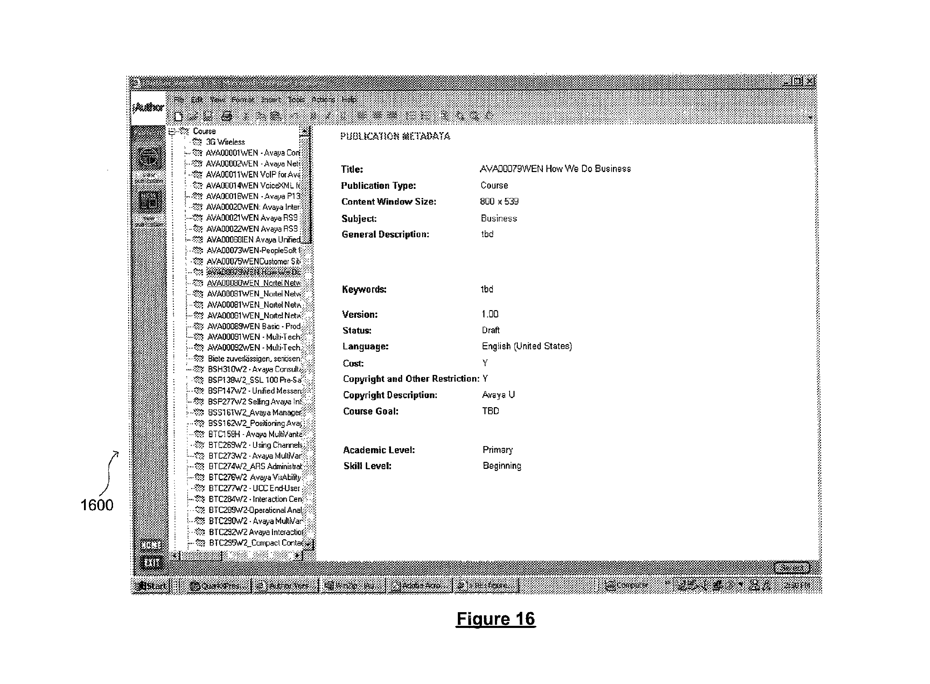

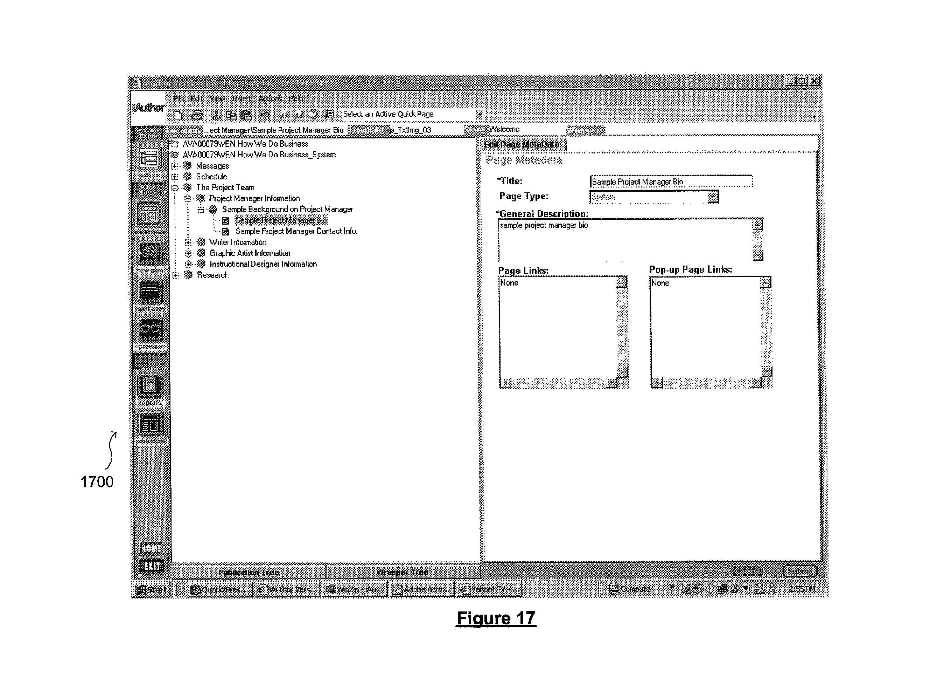

Figure 16 depicts the display of a web page 1600 that is the same as web page 1200 of figure 12 except that the author has selected (shown by highlighting in the library tree) a different publication (entitled "AVA00079WEN How We Do Business"). Similarly, figure 17 depicts the display of a web page 1700 which serves a similar purpose to that of web page 1500 of figure, except that the metadata displayed in web page 1700 is associated with page "Sample Project Manager Bio," which is part of e-learning object "Sample Background on Project Manager, " which in turn is part of module "Project Manager Information." The comparison of figures 12-17 should make it apparent to one of ordinary skill in the art how an author could use the publication library to locate different publications of different types, and to review the contents of those publications. In a manner similar to that described with respect to publication libraries, it would of course be possible for authors in such preferred embodiments of the invention to peruse object libraries and review and revise the information and metadata of desired objects.

Understandably, the object authoring and administration tool according to embodiments of the present invention can be used to modify existing courses or publications in addition to creating new courses. After logging in to the tool and loading the appropriate completed outline (containing the contents, layout, and property information, including module identification, sequencing, and skin information) for a given course or publication, the author can rearrange, replace, delete, or rewrite or reconfigure constituent objects and modules as desired or necessary.

To facilitate the editing of entire courses, several additional functions are provided by the authoring tool. Preferably, systems according to the present invention can enable a global search and replace utility to allow dynamic renaming of text strings within one or more e-learning objects within a course or publication. In this manner, older e-learning objects can be easily integrated with newer objects (containing newer or inconsistent terminology) without the need to individually edit each individual e-learning object.

A similar global replacement functionality preferably is also provided to change the skins applied to the various objects of an entire course or publication. In this manner, an older, but still viable publication or course can be given a new look or feel, such as for when an organization changes its branding.

Additionally, a global course or publication transformation function can be provided by the authoring tool to change the overall layout or navigational paradigm of the course or publication without affecting the content contained in any of the constituent objects. This can update navigational conventions in an entire CAI course or e-publication to make navigation within all objects of the course consistent regardless of which templates from which families were utilized to create the constituent objects. For example, a publication transformation could be performed upon an e-publication to go from the "table of contents menu" navigation and layout paradigm to the "tabbed folder" navigation and layout paradigm (or to force all constituent objects to transform to the appropriate paradigm). Similarly, for example, a transformation can be performed to remove dynamic content displays from all objects and force the course to employ only static content displaying techniques. In such preferred embodiments, this can be accomplished by the authoring tool having previously set up a mapping of individual templates in a first template family to individual templates in one or more template families such that the content of the objects from the pre-transformation objects can be automatically extracted and appropriately inserted into equivalent templates having the desired features.

Also preferably, the authoring tool provides a glossary building function for use with e-publications and CAI courses. As described above, certain electronic objects produced by the tool can have highlighted terms within the provided content that the selection of which will cause a definition of the term to be displayed. Since objects are self-contained, this definition for the highlighted term is completely encapsulated within the object. Due to this fact, the authoring tool can automatically compile a full glossary of all of the defined terms in all of the objects of a given course or publication, and this glossary will be automatically updated whenever objects are added to or deleted from the topical outline.

Also, in even more preferred embodiments, the glossary building function can further include a glossary revising function that will identify when a term is defined in one or more objects and will notify the author when differing definitions is given for the object. By reviewing the glossary, the author can then modify the inconsistent definition of the term through the entire course or publication a single action that then causes appropriate changes to be reflected in the objects. In this manner, consistency can be retained throughout a publication or course that utilizes relatively older and newer objects. Similarly, by reviewing the glossary the author can update the definition for a given term.

In other preferred embodiments of the invention, the authoring tool can track the changes to publications and objects in publication and object libraries made by authors by storing versions thereof in the database system. For example, a publication shell can be provided whereby authors can track previous drafts of objects and find older publications (such as by archiving an entire history that tracks the edits and changes made to particular objects and publications). This feature, among other things, can facilitate the collaboration of multiple authors on a single publication as well as make objects and publications more easily reusable in new publications.

Various modifications of the embodiments herein disclosed will be readily apparent to one skilled in the art after reading the above. For example, the modular object concept can be readily adapted to an automated remote authoring and administrative tool to design and compile electronically delivered standardized tests, like the GRE and SAT. Any and all such modifications are covered by the application as is and will be claimed.

## Claims

1. A method for dynamically compiling and distributing modular electronic publications, said method comprising the steps of:
(a) creating a topical outline designating topical levels for a desired publication, said topical outline detailing the order of one or more desired topics or desired subtopics in said desired publication according to said designated topical levels;
(b) compiling informational content relating to at least one of said topics or subtopics into an electronic format; and
(c) publishing said desired electronic publication by electronically transmitting said information content in said electronic format;
(d) said method being **characterized in that** said informational content is compiled into electronic content objects (101), said electronic content objects each defining self-contained units containing informational content relating to at least one of said topics or subtopics, and said compiling step comprises assembling electronic content objects relevant to said desired topics and desired subtopics and organizing said assembled electronic content objects into said topical outline to create said desired electronic publication.

2. The method of claim 1, **characterized in that** said objects are created by selecting a desired template from a plurality of templates, entering informational content into said template.

3. The method of claim 1, **characterized in that** a plurality of said electronic content objects are electronically stored in said library such that said objects may be incorporated into a plurality of electronic publications.

4. The method of claim 3, **characterized in that** said library may be accessed and updated by a plurality of authors; said authors being able to create and store new electronic content objects in said library and being able to use objects in said library to assemble electronic publications.

5. The method of claim 3, **characterized in that** said electronic content objects are described using metadata, wherein said metadata may be used by said authors to locate appropriate electronic content objects when assembling publications.

6. The method of claim 2, **characterized in that** it includes the steps of:
defining one or more transition objects (102) in said library, each of said transition objects being related to one or more of said electronic objects;
during said assembling of said desired electronic publication, selecting one or more transition objects and one or more related ones of said assembled electronic content objects and combining said selected transition objects with said related ones of said assembled electronic content objects to form said desired publication according to said topical outline.

7. The method of claim 6, **characterized in that** said desired publication comprises an electronic learning course, and said transition objects are selected from a group consisting of:
(a) pre-tests regarding topics in upcoming content objects,
(b) post-tests regarding topics in previous content objects,
(c) introductions to topics or subtopics,
(d) summaries of topics or subtopics, and
(e) segues between topics and subtopics.

8. The method of claim 1, **characterized in that** said publications comprise electronic learning courses containing said electronic content objects and assessment objects, wherein progress of students taking said electronic learning courses may be electronically monitored during said publishing step through the use of said assessment objects.

9. The method of claim 8, **characterized in that** said assessments comprise electronically delivered pre-tests or post-tests.

10. The method of claim 1, **characterized in that** said informational content may be selected from the group consisting of text, images, sounds, video, animations, and graphics.

11. The method of claim 1, **characterized in that** said electronic content objects may be created electronically employing an authoring tool.

12. The method of claim 11, **characterized in that** said authoring tool accesses a central network containing libraries of electronic publications, libraries electronic content objects, and libraries of templates for creating new electronic content objects.

13. The method of claim 11 **characterized in that** said authoring tool is adapted to automatically perform a global change to a navigational paradigm employed in constituent electronic content objects of a given electronic publication.

14. The method of claim 13, **characterized in that** said global change to said navigational paradigm is performed by associating design templates used by said constituent electronic content objects with equivalent templates employing differing navigational paradigms, creating new constituent electronic content objects by populating templates associated with said templates used by said constituent electronic content objects and employing the desired navigational paradigm with the informational content contained in said constituent electronic content objects, and reassembling said new constituent electronic content objects into a transformed electronic publication.

15. The method of claim 11, **characterized in that** said authoring tool is adapted to automatically perform a global search and replace of text strings contained in the informational content encapsulated within each constituent electronic content object of a given electronic publication.

16. The method of claim 11, **characterized in that** said authoring tool is adapted to automatically perform a global search and replace of glossary definitions of terms contained in the informational content encapsulated within each constituent electronic content object of a given electronic publication.

17. The method of claim 1, **characterized in that** said electronic content objects may contain glossary information, said glossary information for a given electronic content object relating to terms present in informational content encapsulated within said given electronic content object, and wherein said glossary information for every assembled electronic content objects in said desired electronic publication may be compiled to prepare a glossary for said entire desired electronic publication.

18. The method of claim 1, **characterized in that** said compiling includes applying a skin to one or more of said assembled electronic content objects to change the look and feel of the objects without affecting informational content.

19. The method of claim 1, **characterized in that** said electronic publication is a computer-aided instruction course and said electronic content objects are electronic learning objects containing instructional content.

20. The method of claim 1, **characterized in that** the method is carried out electronically by communicating with a centralized network (301), said centralized network including a database system (307) for managing databases containing libraries of electronic content objects and libraries of modular electronic publications, wherein authors may communicate with said electronic using an authoring tool operating on a client device (305).

21. The method of claim 20, **characterized in that** said database system comprises databases for electronically storing libraries of different electronic content objects are electronically, said objects being accessible using said authoring to such that they may be incorporated into a plurality of electronic publications.

22. The method of claim 20, **characterized in that** said library may be accessed and updated by a plurality of authors using said authoring tool; said authors being able to create and store new electronic content objects in said library and being able to use objects in said library to assemble electronic publications.
